# EUROPEAN PATENT APPLICATION

(11) **EP 4 613 475 A1**
(43) Date of publication of application: **10.09.2025**
(21) Application number: 23886362.5
(22) Date of filing: 03.11.2023
(51) Int. Cl.: B32B 7/023, B32B 3/26, B32B 27/08, B32B 38/00, B32B 37/24

(54) **DECORATION FILM FOR HIDDEN DISPLAY**

(30) Priority: 04.11.2022 KR 20220146090
(71) Applicant: Miraenanotech Co., Ltd., Heungdeok-gu Cheongju-si, Chungcheongbuk-do 28122 (KR)
(72) Inventor: YEON, Hyo Dong, Cheongju-si, Chungcheongbuk-do 28330 (KR); LEE, Sun Yong, Cheongju-si, Chungcheongbuk-do 28118 (KR); JANG, In Teak, Cheongju-si, Chungcheongbuk-do 28124 (KR); HAN, Byung Sun, Cheongju-si, Chungcheongbuk-do 28516 (KR)
(74) Representative: Frischknecht, Harry Ralph
(86) International application number: PCT/KR2023/017508
(87) International publication number: WO 2024/096668

(57) **Abstract**

The present invention relates to a decoration film for a hidden display and, more specifically, to a decoration film for a hidden display, which may allow, in a state in which a display is not operated in a normal situation, the decoration film to be displayed on a surface of the display to improve a sense of unity with a surrounding decoration film, and allow, in a situation in which a user turns on the display and operates the display, user visibility with respect to display information of the display to be improved and concurrently prevent delamination of layers.

## Description

### TECHNICAL FIELD

The present disclosure relates to a decoration film for a hidden display and, more specifically, to a decoration film for a hidden display, which may allow, in a state in which a display is not operated in a normal situation, the decoration film to be visualized on a surface of the display to improve a sense of unity with a surrounding decoration film, and allow, in a situation in which a user turns on the display and operates the display, user visibility with respect to display information of the display to be improved and concurrently prevent delamination of layers.

### BACKGROUND ART

Recently, due to the diversification of functions, displays, operation switches, and instrument features are increasingly being incorporated not only in vehicles but also in home appliances and furniture. In particular, as electric vehicles evolve and offer more interior space, the application of displays with various functions such as information and entertainment is increasing. Accordingly, as the arrangement of operation switches and displays becomes more complex, the aesthetics are deteriorating, while the luxury and interior quality of personal space are increasingly demanded.

For this reason, a decoration film for a hidden display has been developed. An increase in the number and size of displays may reduce the driver's driving concentration, and the additional display buttons may cause inconvenience to the driver, so the use of the decoration film for the hidden display that hides the displays with the same design as wood, leather, and carbon fiber co mm only used in vehicles is expected to increase.

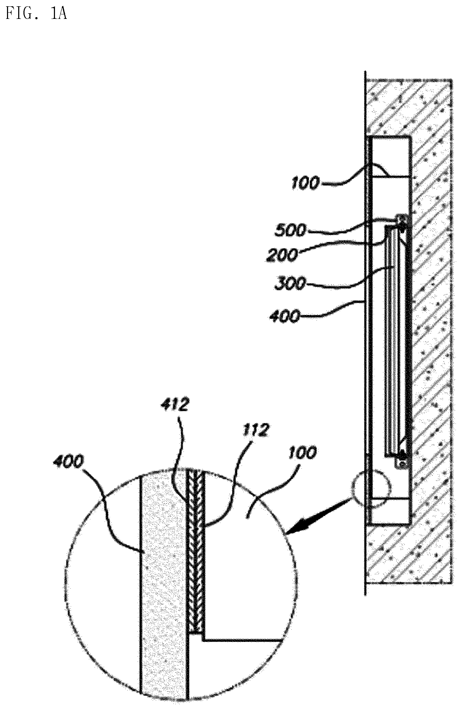

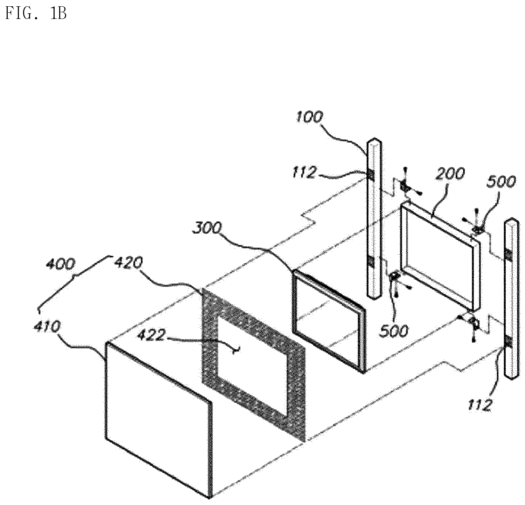

Meanwhile, in the related art, a panel for a hidden display device and a method for installing a hidden display device are developed, in which a panel that allows an embedded display device to be visible from the outside when an operating image is projected, while not normally visible from the outside as shown in FIGS. 1A and 1B, may be obtained, and when the display device is embedded and installed, an installation position is conveniently adjusted, and a construction type of the display device is easily constructed and installed, but a display is not clearly revealed when a color represented in the display is changed due to an influence of a color film or when an image of the display is 200 cd or less, and a metal coating is applied to increase a shielding effect, there is a problem that the touch function of the display did not work. In addition, in the related art, a decoration film in which display information and an image of a decoration film are implemented with a low quality has been used, and there was a problem of interfering with the information and interior aesthetics provided by the display due to the transmission of limited text information and the color and image of the design film.

### DETAILED DESCRIPTION OF THE INVENTION

### TECHNICAL PROBLEM

The present disclosure has been made in view of the above problems, and it is an object of the present disclosure to provide a decoration film which may allow, in a state in which a display is not operated in a normal situation, the decoration film to be visualized on a surface of the display to improve a sense of unity with a surrounding decoration film, and allow, in a situation in which a user turns on the display and operates the display, user visibility with respect to display information of the display to be improved.

The present disclosure has been made in view of the above problems, and it is an object of the present disclosure to provide a decoration film for a hidden display which prevents light distortion and light leakage, enhances the design and aesthetics of the decoration film, improves the visibility and delivery of display information, and enables clear expression of surface designs for applications such as home appliances and vehicle dashboards, while also preventing delamination of layers.

### TECHNICAL SOLUTION

The present disclosure provides a decoration film for a hidden display including a base layer, a decorative layer having at least one through-hole, and an optical guide layer including a foundation configured to be disposed between the base layer and the decorative layer and at least one light guider configured to have a protrusion extending from the foundation and passing through the through-hole and protruding above the through-hole.

According to an embodiment of the present disclosure, the decoration film may further include a shielding layer configured to be disposed on the decorative layer and have a through-hole corresponding to the through-hole, wherein the protrusion of the light guider may protrude above the through-hole of the shielding layer.

In addition, the decoration film may further include a background layer configured to be disposed between the decorative layer and the shielding layer, and have a through-hole corresponding to the through-hole, wherein the light guider may penetrate through the through-hole.

In addition, a refractive index of the light guider may be greater than a refractive index of the decorative layer or a refractive index of the background layer.

In addition, a difference between the refractive index of the light guider and the refractive index of the decorative layer or a difference between the refractive index of the light guider and the refractive index of the background layer may be greater than 0 and 0.5 or less.

In addition, the decoration film may further include a cover layer configured to be disposed on the decorative layer and cover the protrusion of the light guider.

In addition, a refractive index of the light guider may be greater than a refractive index of the cover layer.

In addition, a refractive index of the light guider may be 1.3 or more, and a refractive index of the cover layer may be 1.25 or more.

In addition, the light guider may have a vertical length of 5 *µ*m to 90 *µ*m.

In addition, the protrusion of the light guider may have a round shape with a predetermined curvature, and the protrusion may have a curvature radius of 2.5 *µ*m to 260 *µ*m.

In addition, the protrusion of the light guider may have a prism shape having at least two triangular prisms at its end, and an angle between two triangular prisms adjacent to each other may be 70° to 100°.

In addition, the protrusion may have a protrusion height greater than 0 and 10 *µ*m or less.

In addition, the light guider may have an average cross-sectional diameter of 10 *µ*m to 500 *µ*m.

In addition, the optical guide layer may include at least two light guiders, and an average distance between two light guides adjacent to each other may be 20 *µ*m to 500 *µ*m.

In addition, a horizontal cross-section of the light guider may have a wavy shape including a long side which is a curved line and a short side which is a straight line or a curved line, and a longitudinal direction of the wavy shape and a longitudinal direction of the decoration film for the hidden display may have an angle of 20° to 50°.

In addition, a longitudinal distance of the wave shape may be 50 *µ*m to 150 *µ*m, and a distance between the long sides may be 5 *µ*m to 50 *µ*m.

In addition, the light guider may have an opaque portion in at least some of its area to block light transmission.

In addition, the light guider may be configured to be disposed such that one longitudinal direction of the hidden display decoration film and the longitudinal direction of the wave shape form only one acute angle, or the light guider may be configured to be disposed such that a first wave shape in which one longitudinal direction of the hidden display decoration film and the longitudinal direction of the wave shape form an acute angle and a second wave shape forming an obtuse angle are alternately arranged.

In addition, the present disclosure provides a decoration film for a hidden display, which includes a base layer, a decorative layer configured to have at least one light passage hole, a shielding layer configured to be disposed on the decorative layer and have a light passage hole corresponding to the light passage hole, and an adhesive layer configured to be disposed between the base layer and the decorative layer.

According to an embodiment of the present disclosure, the decoration film may further include a background layer configured to be disposed between the decorative layer and the shielding layer and have a light passage hole corresponding to the light passage hole.

The term "on ~" as used herein includes all things in which another layer is disposed to come into contact with an upper portion of one layer and another layer is disposed on an upper portion of one layer and includes a separate layer therebetween.

### ADVANTAGEOUS EFFECTS

The decoration film for the hidden display according to the present disclosure is configured such that it allows, in a state in which a display is not operated in a normal situation, the decoration film to be displayed on a surface of the display to improve a sense of unity with a surrounding decoration film, and allows, in a situation in which a user turns on the display and operates the display, user visibility with respect to display information of the display to be improved and concurrently prevent delamination of layers.

### DESCRIPTION OF DRAWINGS

FIGS. 1A and 1B are exemplary views showing a state of installing a conventional hidden display device in a partial cross-section, and exemplary views showing each configuration for installing the hidden display device, respectively.
FIG. 2 is a cross-sectional view of a decoration film for a hidden display according to an embodiment of the present disclosure.
FIG. 3 is SEM photographs obtained by photographing a vertical cross-section and a surface of a partial configuration of a decoration film for a hidden display according to an embodiment of the present disclosure.
FIGS. 4A and 4B are schematic views of horizontal cross-sections showing a decoration film for a hidden display according to an embodiment of the present disclosure.
FIG. 5 is a view showing a light path state according to the presence or absence of a light guider in a decoration film for a hidden display.
FIG. 6 is a cross-sectional view of a decoration film for a hidden display having a prism-shaped protrusion according to another embodiment of the present disclosure.
FIG. 7 is a schematic view of a horizontal cross-section showing a shape of a light guider of a decoration film for a hidden display, the light guider having a wave-shaped cross-section, according to yet another embodiment of the present disclosure.
FIG. 8 is a schematic view of a horizontal cross-section showing an arrangement of an opaque portion of a light guider of a decoration film for a hidden display, the light guider having a wave-shaped cross-section, according to still another embodiment of the present disclosure.
FIG. 9 is a schematic view of a horizontal cross-section showing an arrangement of a light guider of a decoration film for a hidden display, the light guider having a wave-shaped cross-section, according to yet still another embodiment of the present disclosure.
FIG. 10 is a vertical cross-sectional view of a decoration film for a hidden display according to another embodiment of the present disclosure.
FIG. 11 is a photo of the visibility evaluation according to whether an optical guide layer is included in a decoration film for a hidden display according to an embodiment of the present disclosure, FIG. 11A is a photo of the display, FIG. 11B is a photo in the case of including an optical guide layer (Example 1), and FIG. 11C is a photo in the case of including only the decorative layer 13 without an optical guide layer (Comparative Example 1).

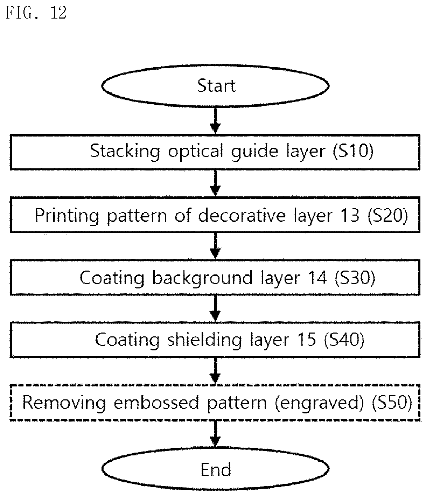

FIG. 12 is a process flowchart of a method for manufacturing a decoration film for a hidden display according to an embodiment of the present disclosure.

### BEST MODE OF THE EMBODIMENTS

Hereinafter, embodiments of the present disclosure will be described in detail with reference to the accompanying drawings so that the present disclosure can be easily implemented by those skilled in the art to which the present disclosure pertains. The present disclosure may be implemented in various different forms and is not limited to the embodiments described herein. In the drawings, parts not related to the description are omitted to clearly describe the present disclosure, and the same or similar components are denoted by the same reference numerals throughout the specification.

The present disclosure is a decoration film for a hidden display, and an image displayed to a user is different according to the operation/non-operation of the display.

That is, when the display is not operated, the printed decorative pattern applied to the film is visualized to the user, and when the display is operated, the image of the display is projected externally, allowing the user visually recognize the output information or image on the display screen.

The embodiment of the present disclosure is applied to a display surface for various electronic devices, but it is more preferable that, in addition to the display surface, it is also applied to but also to an exterior surface of a product on which the display is mounted, so that the printed decorative pattern is simultaneously displayed on both the display surface and the product's exterior surface when the display is not operated, thereby creating a sense of unity.

For example, when applied to a vehicle display, a decoration film for a hidden display of the present disclosure may be coupled to a surface of a vehicle AVN (Audio Video Navigation) and a surface of a dashboard.

The decoration film of the present disclosure may be applied to an exterior of various electronic devices with a display output device in addition to the vehicle display.

Hereinafter, a decoration film for a hidden display according to an embodiment of the present disclosure will be described.

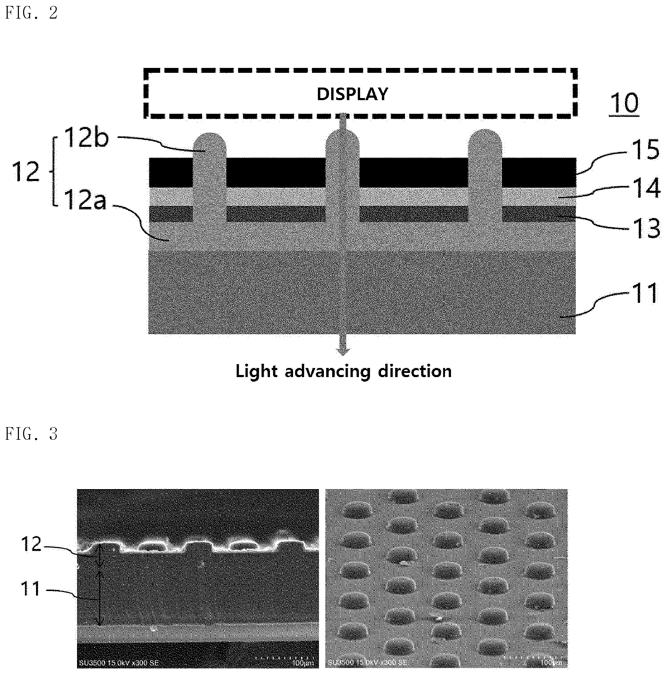

As shown in FIG. 2, the decoration film 10 for the hidden display according to an embodiment of the present disclosure includes a base layer 11, a decorative layer 13 having at least one through-hole, and an optical guide layer 12 including a foundation 12a disposed between the base layer 14 and the decorative layer 13 and at least one light guider 12b configured with a protrusion extending from the foundation 12a and passing through the through-hole and protruding above the through-hole.

First, the base layer 11 will be described.

The base layer 11 supports an entire structure, is disposed closest to a user to protect the decoration film for hidden display from a chemical/physical impact, and performs a function of implementing a texture of the decorative layer described below, without negatively affecting an optical property of the decoration film for hidden display, and the base layer 11 may be a known polymer film capable of exhibiting a predetermined transparency, which may be co mm only used in the art, and for example, one or two or more of a polycarbonate (PC) film, a polymethyl methacrylate (PMMA) film, and a polyethylene terephthalate (PET) film may be used in combination.

In addition, the base layer 11 may have a thickness of 5 *µ*m to 2 mm in terms of excellent processability, ease of installation, and lightness in terms of size, and preferably, a thickness of 10 *µ*m to 1 mm may be advantageous in terms of achieving the above effects.

And, the base layer 11 may have a hard coating applied to one side such as anti-glare (AG), anti-reflection (AR), or low reflection (LR) coatings to improve handling and usability such as prevention of reflection and scattering of the decoration film 10 for the hidden display, but may not be applied with the hard coating when it is expected to affect the optical properties of the hidden display decoration film, therefore the present disclosure does not specifically limit this.

Next, the optical guide layer 12 will be described.

As described above, the optical guide layer 12 includes the foundation 12a disposed between the base layer 14 and the decorative layer 13 described later, and at least one light guider 12b configured with a protrusion extending from the foundation 12a and penetrating through the through-hole and protruding above the through-hole.

The light projected from the display is emitted to the outside through the light guider 12b, so that information or image on the display is recognized by the external user from the side of the base layer 11.

The foundation 12a and the light guider 12b may be made of the same material or different materials, but preferably, they may be formed of the same material in terms of process efficiency and to prevent delaminating between the foundation and the light guider due to heterogeneous bonding.

Furthermore, the optical guide layer 12 may be used without limitation as long as it is any transparent material that may be used in the art, and preferably, at least one of an acrylic resin, an unsaturated polyester resin, an epoxy resin, a polyene resin, and an acrylate ester resin may be used, and more preferably, an acrylic resin may be used in terms of increasing the adhesion rate with the base layer 11 described above without affecting the display image visibility, and even more preferably, a UV-curable acrylic resin may be used.

The foundation 12a has a flat shape and may have a predetermined thickness, and preferably, the thickness may be 10 *µ*m or less, and more preferably, 5 *µ*m or less, which is advantageous in terms of stable adhesion with the base layer 11 described above.

In addition, the light guider 12b is configured as a protrusion that extends from the foundation 12a and protrudes upward from the foundation 12a in a pillar-shape penetrating through a through-hole and protrudes above the through-hole by a predetermined length. The optical guide layer 12 may include at least one the light guider 12b, and preferably, at least two the light guiders 12b.

In addition, the light guider 12b may have a vertical length of 3 *µ*m to 100 *µ*m, and preferably 5 *µ*m to 90 *µ*m. As the light guider satisfies the vertical length range, it may be more advantageous in terms of handling and quality improvement.

Meanwhile, the light guider 12b may improve the visibility of information displayed on the display by using internal reflections in the light guider 12b. Accordingly, the light guider 12b may have a refractive index of 1.3 or more, and preferably, a refractive index of 1.4 to 1.55. As the light guider satisfies the above refractive index range, light incident into the light guider 12b may be internally reflected without being absorbed by another layer including the through-hole, allowing a large amount of light to be transmitted.

A refractive index of the light guider 12b may be greater than a refractive index of the decorative layer 13 described later and/or a refractive index of the background layer 14 described later, and preferably, a difference between the refractive index of the light guider 12b and the refractive index of the decorative layer 13 or a difference between the refractive index of the light guider 12b and the refractive index of the background layer 14 may be greater than 0 and 0.5 or less. Accordingly, when light penetrating through the light guider 12b having a relatively high refractive index meets a boundary surface with the decorative layer 13 or the background layer 14 having a relatively low refractive index, the light may not be easily absorbed on the boundary surface thereof and internal reflection may be induced to increase the light transmittance, thereby improving the user's visibility with respect to the screen image when the display is operated.

In addition, since the light guider 12b is formed with the protrusion protruding above the through-hole, the surface area exposed on the surface increases, thereby enhancing the inflow of light exhibited from the display.

Meanwhile, when a decoration film for a hidden display according to the present disclosure further includes a shielding layer 15 described below, the protrusion may protrude above a through-hole of the shielding layer 15, and when it includes both the background layer 14 and the shielding layer 15 described below, it may protrude above the through-hole of the shielding layer 15.

In this case, the protrusion may have a protrusion height greater than 0 *µ*m to 10 *µ*m or less, and preferably it may be 3 *µ*m to 5 *µ*m. As the protrusion height range of the protrusion is satisfied, it may be more advantageous in terms of the effect of increasing the inflow of light projected from the display.

Meanwhile, the top of the protrusion of the light guider 12b may have one or more of the following shapes: a flat shape, an amorphous shape, a round shape, or a polygonal shape, but for enhanced optical effects, it may preferably have a round shape, as shown in FIGS. 2 and 3. Accordingly, the light emitted from the display may be refracted to collect and guide a large amount of light into the light guider 12b.

At this time, the round shape may be implemented such that the entire protrusion may have a round shape, or a center of the upper end may be a flat shape and corners may have a round shape, thereby not particularly limiting the round shape in the present disclosure.

In addition, as described above, when the light guider 12b, particularly, the protrusion described above has a round shape while having a refractive index of 1.3 or more, more display light may be refracted into the light guider 12b and more light may penetrate through, thereby further improving the visibility of information transmitted from the display.

The protrusion on the top of the light guider 12b may have a curvature radius of 2.5 *µ*m to 260 *µ*m, and preferably, the curvature radius may be 3 *µ*m to 250 *µ*m. As the protrusion satisfies the curvature radius range, it may be more advantageous in terms of improving visibility during display operation.

The protrusion on the top of the light guider 12b may have a predetermined concavo-convex shape on its surface, thereby improving the shielding effect by dispersing the light entering the display from the outside. That is, when a predetermined concavo-convex pattern is formed on the surface of the protrusion of the light guider 12b, the light entering the light guider from the outside when the display is not operated is dispersed by the concavo-convex pattern, which has the effect of making it difficult for the user to recognize the presence of the display when it is not in use. This has the effect of making the decorative pattern of the decoration film on the surface of the display more clearly visible to the user when the display is not in use.

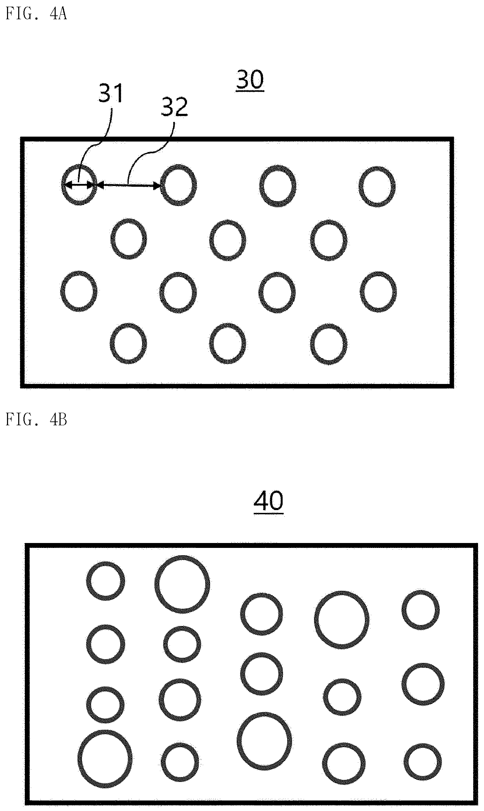

In addition, the light guider 12b may have a circular cross-sectional shape as shown in FIGS. 4A and 4B, or may have various shapes such as an elliptical shape, an amorphous shape, a polygonal shape, and preferably a circular shape or an elliptical shape for ease of manufacturing process.

And, since the light guider 12b may be arranged at equal intervals or may be arranged sporadically at irregular intervals, and various applications are possible in the arrangement shape of the light guider, the present disclosure does not specifically limit this.

On the other hand, the light guider 12b may have an average cross-sectional diameter 31 of 10 *µ*m to 500 *µ*m, preferably 12 *µ*m to 480 *µ*m, and more preferably 50 *µ*m to 100 *µ*m. If the average cross-sectional diameter of the light guider is less than 10 *µ*m, the image visibility is degraded, which negatively affects information transmission when the display is operated, and if it is greater than 500 *µ*m, the display is visible even when the display is not operated, so that the display does not have an effect of the hidden display.

At this time, each cross-sectional diameter 31 of the light guides may be configured randomly, such that each of the light guides may have the same cross-sectional diameter or may have different cross-sectional diameters.

In addition, the distance 32 between two light guides adjacent to each other may be 20 to 50 *µ*m, more preferably 50 to 150 *µ*m. If the distance between the light guiders is less than 20 *µ*m, the shielding effect of the light guiders is degraded, and the display shielding effect is reduced, and if the distance between the light guiders is greater than 500 *µ*m, the visibility when the display is operated may be reduced.

The light transmittance is determined by the cross-sectional diameter 31 of the light guider and the distance 32 between the light guiders, and the light transmittance is 10% to 50%, preferably 10% to 30%, and more preferably 15% to 25% in consideration of the image visibility when the display is operated and the invisibility of the display as well as the visibility of the decorative layer when the display is not operated.

The light guiders 12b may be arranged in a regular or irregular pattern, and when arranged irregularly, the moiré phenomenon that may occur due to the overlap between the pixel arrangement of the display and the light guider arrangement of the optical guide layer 12 may be suppressed.

Even when the light guiders 12b are arranged in a regular pattern, the entire array of regularly arranged light guiders may be tilted to form an angle of 20° to 50° relative to the horizontal direction of the decoration film for the hidden display, and more preferably, the angle may be tilted to form an angle of 30° to 40°. Through this, even if the light guiders 12b are arranged in a regular pattern, tilting them may suppress the moiré phenomenon that may occur due to the overlap between the pixel arrangement of the display and the light guider arrangement of the optical guide layer 12.

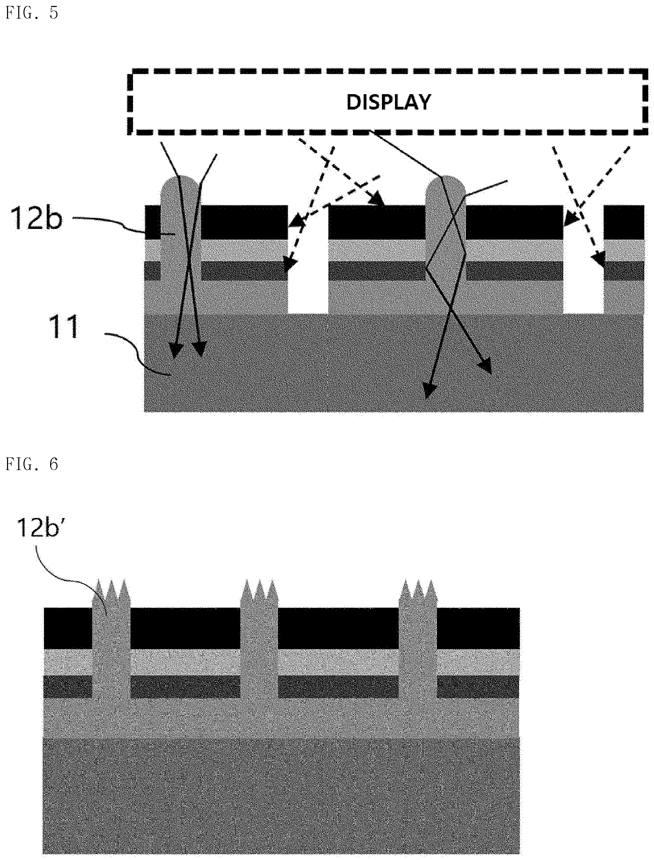

According to another embodiment of the present disclosure, as shown in FIG. 6, the protrusion of the light guider 12b' may have a prism shape having at least two triangular prisms at its end, and an angle between the triangular prisms adjacent to each other may be 70° to 100°, preferably, an angle between the triangular prisms adjacent to each other may be 85° to 95°, a base length of the triangle in each cross-section of the triangular prisms may be 2 *µ*m to 20 *µ*m and a height thereof may be 1 *µ*m to 5 *µ*m, preferably, a base length thereof may be 2 *µ*m to 4 *µ*m and a height thereof may be 1 *µ*m to 3 *µ*m. Accordingly, the light collecting effect may be improved, and thus the visibility of the user with respect to the screen image may be improved when the display is operated.

Meanwhile, the possibility of a moiré generation may be increased by interference with pixels repeatedly arranged on the display according to the shape of the light guider, and particularly, when the light guider is a rectangular shape, each of horizontal and vertical outer boundary lines of the rectangular shape thereof and each of horizontal and vertical outer boundary lines of the pixels are in the same direction, and a moiré may be generated by overlapping interference thereof.

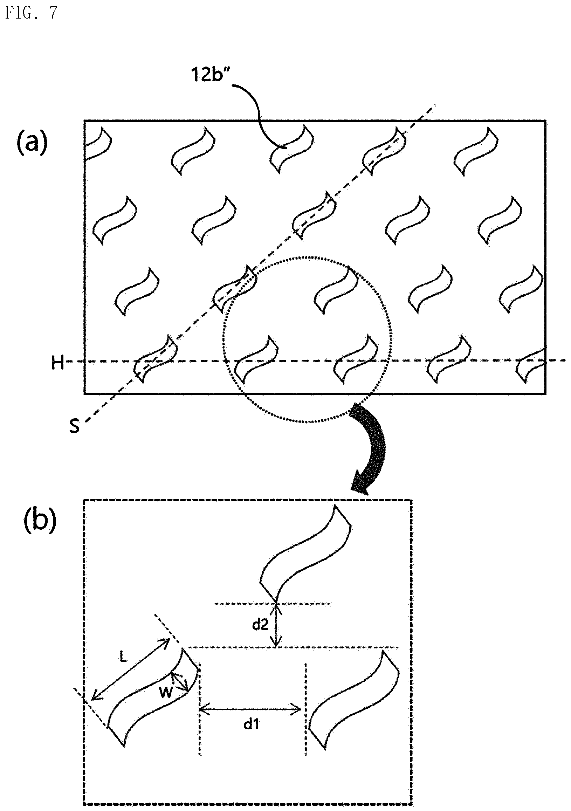

According to another embodiment of the present disclosure, as shown in FIG. 7, a horizontal cross-section of the light guider 12b may have a wave shape including a long side which is a curved line and a short side which is a straight line or a curved line, and the longitudinal direction S of the wave shape and the longitudinal direction H of the decoration film for the hidden display may have an angle of 20° to 50°, preferably, an angle of 30° to 40°. Accordingly, moiré occurrence may be prevented.

In this case, a longitudinal distance L of the wave shape may be 50 *µ*m to 150 *µ*m, a distance W between the long sides may be 5 *µ*m to 50 *µ*m, a horizontal distance d1 between the light guider and another light guider adjacent in the longitudinal direction of the hidden display decoration film may be 30 *µ*m to 200 *µ*m, and a vertical distance d2 between the light guider and another light guider adjacent in the longitudinal direction of the hidden display decoration film may be 20 *µ*m to 150 *µ*m. Accordingly, it may be more advantageous in terms of preventing moiré occurrence.

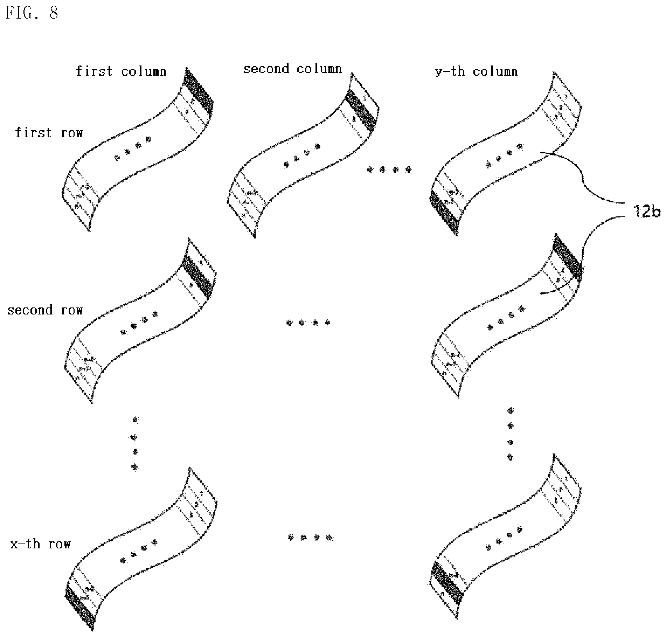

In addition, according to another embodiment of the present disclosure, a decoration film a hidden display may be configured such that the light guider includes an opaque portion in at least some of its area to block light transmission, and preferably, the opaque portion may be disposed in different regions within each light guider according to the arrangement order of the light guiders in the decoration film for the hidden display. Accordingly, it may be more advantageous in terms of preventing the moiré occurrence. For example, a first-arranged opaque portion of the light guider and a second-arranged opaque portion thereof may be disposed in an area which does not overlap with each other when viewed based on the horizontal cross-section of the light guider, or in an area which overlaps at least partially. In addition, the arrangement of the opaque portion within each light guider may be randomly arranged or may be arranged to have a predetermined regularity according to the arrangement order of the light guiders in the hidden display decoration film. An example of an arrangement structure having a predetermined regularity with respect to the arrangement of the opaque portion in each light guider will be described with reference to FIG. 8. As an example, as shown in FIG. 8, the decoration film for the hidden display may include a total of x×y light guiders 12b" in x rows and y columns (where x and y are natural numbers), and the light guiders 12b" may be divided into n segments along the longitudinal direction of the wave shapes (where n is a natural number), one of these segments may be an opaque portion, and the opaque portion in the x-th row and y-th column may be disposed in the (x+y-1)-th segment, starting from the uppermost segment, and when x+y-1 exceeds n, the opaque portion may be disposed in the (x+y-1-n)-th segment, starting from the uppermost segment. Accordingly, it may be further advantageous in terms of preventing the moiré occurrence.

Additionally, it is preferable that the light guiders arranged in the x rows and y columns are defined as one block, and the block is sequentially arranged in a horizontal direction and a vertical direction in a plurality of rows and columns over the entire film area, and in this case, even when the light guiders are applied to a large-area display having a predetermined size or larger, the moiré avoidance pattern is easily applied.

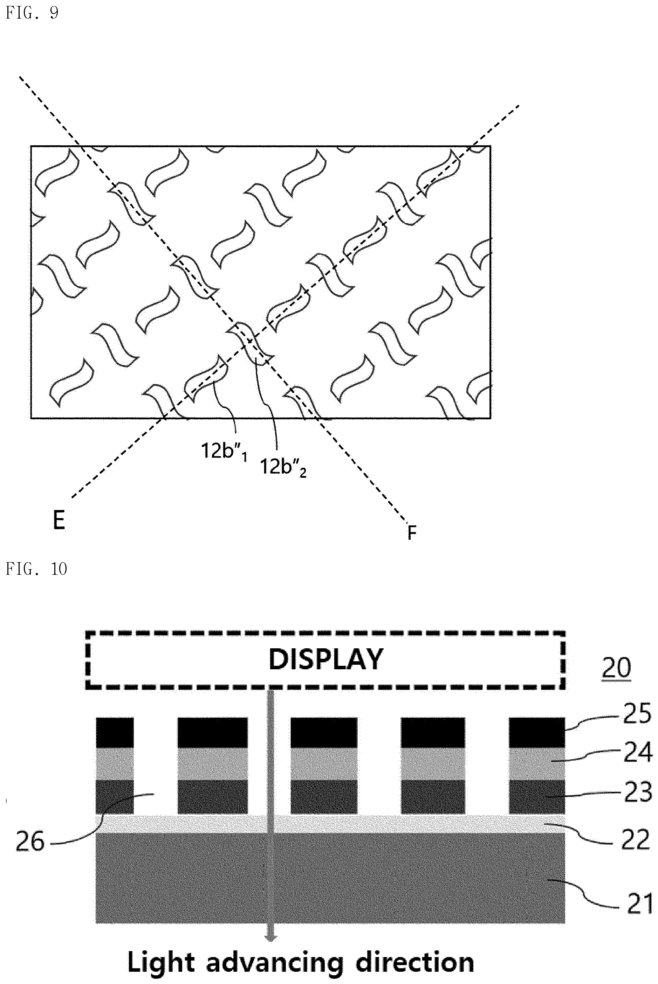

And, according to another embodiment of the present disclosure, the light guiders 12b" may be disposed such that one longitudinal direction of the decoration film for the hidden display and the longitudinal direction of the wave shape form only one acute angle, or as shown in FIG. 9, the light guiders may be disposed such that a first wave shape 12b"₁ in which one longitudinal direction of the decoration film for the hidden display and the longitudinal direction E of the wave shape form an acute angle and a second wave shape 12b"₂ in which the longitudinal direction F of the wave shape forms an obtuse angle are alternately arranged. Accordingly, it may be further advantageous in terms of preventing the moiré occurrence.

Next, the decorative layer 13 will be described.

The decorative layer 13 is formed to have a predetermined thickness, and is a layer having a pattern visible to a user when the display is not operated.

The decorative layer 13 may be expressed as a single color with black, white, or a specific color applied, or as an interior pattern with various colors applied, and these decorative layers may be implemented by printing with ink. For example, oil/water-based or UV inks may be used. Various types of printing methods, such as gravure, offset, flexography, laser, digital, and screen printing, may be used, and the selection of the printing method depends on the desired print quantity and clarity.

Next, the background layer 14 will be described.

According to an embodiment of the present disclosure, it may further include the background layer 14 configured to be disposed between the decorative layer 13 and the shielding layer 15 described below and have a through-hole corresponding to the through-hole, and in this case, the light guider 12b may penetrate through the through-hole.

The background layer 14 may be configured to have a predetermined thickness between the decorative layer 13 and the shielding layer 15 described below to increase the clarity of the image printed on the decorative layer 13, and a white or a color having a bright saturation relative to the image may be applied to this layer. In this case, the background layer 14 may use the same ink as the decorative layer 13 or a material of the same ink or oil/water-based coating or a paste-type material.

The material of the background layer 14 may be various materials provided with a good combination with the printing ink of the decorative layer, and may be selected depending on whether or not there is a touch display.

Next, the shielding layer 15 will be described.

According to one embodiment of the present disclosure, the hidden display decoration film 10 may further include a shielding layer 15 configured to be disposed on the decorative layer 13 and have a through-hole corresponding to the through-hole.

The shielding layer 15 may be formed on the decorative layer 13 with a predetermined thickness to prevent light from leaking out in areas other than the optical guide layer 12, and may be printed in black or a color with a low saturation, and may be applied using the same material as the decorative layer 13 and/or the background layer 14 or with a different material.

Meanwhile, only one of the background layer 14 and the shielding layer 15 may be applied according to a color pattern printed on the decorative layer 13 or both of the background layer 14 and the shielding layer 15 may not be applied. In other words, if the pattern printed on the decorative layer 13 is expressed in dark or a single color, the background layer 14 is excluded and only the shielding portion 15 may be applied on the upper surface of the decorative layer 13, or if the color printed on the decorative layer 13 is expressed only in black or white, both of the background layer 14 and the shielding portion 15 may be omitted. However, the present disclosure is not particularly limited thereto.

The material of the shielding layer 15 may be applied in black or a color with low saturation, and the material may be selected depending on the performance of the display. If the adhesion between the material of the decorative layer and the material of the background layer is good, various materials may be used. The shielding layer may be selected depending on whether or not there is the touch display.

Meanwhile, when a decoration film 10 for a hidden display according to an embodiment of the present disclosure is combined with a display, the hidden display decoration film is first combined on an outer surface of an exterior material, and the display is combined on an inner surface of the exterior material, and the hidden display decoration film is positioned in front of the display, thereby being combined with each other.

If we explain as an example the case where the hidden display decoration film is combined on the outer surface of the exterior material, the hidden display decoration film may be attached and combined using an adhesive on the outer surface of the pre-manufactured exterior material.

If we explain as another example the case where the hidden display decoration film is combined on the outer surface of the exterior material, when the exterior material is manufactured using an injection molding method, the hidden display decoration film is placed inside a pre-mold, and as the resin is injected into the mold to form the exterior material, it is integrally combined with the hidden display decoration film.

Here, the hidden display decoration film 10 may be damaged due to the high resin temperature during resin injection into the mold, potentially causing the decorative layer 13, the background layer 14, the shielding layer 15 or the light guider 12b to melt, and to prevent this, a cover layer may be added with a predetermined thickness on top of the decorative layer 13, the background layer 14 or the shielding layer 15, covering the protrusion of the light guider 12b.

The cover layer may be formed by applying a UV-curable resin made of a transparent acrylate monomer material.

Alternatively, the cover layer may be formed by attaching a separate durable film with an adhesive.

Here, the adhesive layer may be made of a transparent UV OCA, a thermally cured OCA, or the like, and the durable film may be made of a polycarbonate (PC) film, a polymethyl methacrylate (PMMA) film, a PET film, or the like.

The thickness of the cover layer may be formed to be 5 *µ*m to 60 *µ*m in order to withstand the high temperature of the injection resin well.

In addition, the refractive index of the cover layer may be smaller than the refractive index of the light guider 12b described above. Here, the refractive index of the cover layer may be 1.25 or more, and preferably, the refractive index may be 1.35 to 1.54. A difference between the refractive index of the cover layer and the refractive index of the light guider may be greater than 0 to 0.05 or less. Accordingly, light emitted from the display may be easily introduced and collected from the cover layer into the optical guide layer 12.

Meanwhile, a decoration film 10 for a hidden display according to another embodiment of the present disclosure may be coupled in a direction opposite to a direction in which the decoration film is coupled when the decoration film is coupled to the front of the display.

That is, the base layer of the hidden display decoration film 10 is disposed close to the display screen and the light guider is disposed relatively far from the display.

At this time, between the light guiders, the shielding layer 15, the background layer 14, and the decorative layer 13 are stacked in order from the base. The shielding layer 15, the background layer 14, and the decorative layer 13 stacked may be partially removed.

FIG. 5 is a view showing a light path state according to the presence or absence of the light guider 12b in the decoration film 10 for the hidden display.

As shown in FIG. 5, some of the light emitted from the display screen is absorbed and blocked by the shielding layer 15, and the remaining light is introduced into the protrusions of the plurality of light guiders 12b to be internally refracted, and is emitted to the outside through the foundation 12a and the base layer 11 along the inside of the light guider 12b to be visible to the user.

Under this condition, in the above process, the light incident on the boundary between the inside of the light guider 12b and the adjacent background layer 14 and the decorative layer 13 is reflected at the boundary due to the refractive index of the light guider 12b being higher than those of the background layer 14 and the decorative layer 13, thereby increasing light transmittance.

In particular, the light guide 12b has the protrusion that protrudes higher than the shielding layer 15, and light introduced through the protrusion is emitted to the outside through internal reflection, thereby improving light utilization efficiency through this tunnel effect.

If a passage is formed in an empty space generated when the light guider 12b is vacant in the decoration film, only the light guided in a direction perpendicular to the passage penetrates through the decoration film, and the light guided in a predetermined angle other than the direction perpendicular to the passage is absorbed when the light reaches the inner wall surface of one or more of the adjacent decorative layer 13, the background layer 14, and the shielding layer 15, and thus the light transmittance decreases relatively.

Meanwhile, as shown in FIG. 10, a decoration film 20 for a hidden display according to another embodiment of the present disclosure includes a base layer 21, a decorative layer 23 configured to have at least one light passage hole 26, a shielding layer 15 configured to be disposed on the decorative layer 23 and have a light passage hole 26, and an adhesive layer 22 configured to be disposed between the base layer 21 and the decorative layer (23).

In addition, a decoration film 20 for a hidden display according to another embodiment of the present disclosure may further include a background layer 24 configured to be disposed between the decorative layer 23 and the shielding layer 15 and have a light passage hole 26 corresponding to the light passage hole 26.

Hereinafter, in the description of the decoration film 20 for the hidden display according to another embodiment of the present disclosure, descriptions of the base layer 21, the decorative layer 23, the background layer 24, and the shielding layer 25, which are the same as those described in the description of the decoration film 10 for the hidden display according to the above-described embodiment of the present disclosure, will be omitted.

The adhesive layer 22 is formed between the base layer 21 and the decorative layer 23, and the decorative layer 23 is attached to the base layer 21 by the adhesive layer 22. In this case, the adhesive layer 22 may be applied using a transparent optically clear adhesive (OCA).

The light passage hole 26 is formed in a hole shape, penetrating through the decorative layer 23, the background layer 24, and the shielding layer 25, and the light passage hole 26 is formed in at least one, preferably in a plurality at a predetermined interval.

The description of a planar arrangement shape and an arrangement interval of each of the light passage holes is the same as the description of the arrangement shape and the arrangement interval of each of the light guiders 12b mentioned in the decoration film 10 for the hidden display according to the above-described embodiment of the present disclosure and will be omitted.

In addition, the description of the cross-sectional diameter of each of the light passage holes 26 is the same as the description of the cross-sectional diameter 31 of each of the light guiders mentioned in the above-described embodiment of the present disclosure and will be omitted.

Meanwhile, a decoration film 20 for a hidden display according to another embodiment of the present disclosure may be configured to protect each layer by filling the light passage hole 26 with a general transparent binder, or air, so the present disclosure does not specifically limit this.

Further, a decoration film 20 for a hidden display according to another embodiment of the present disclosure may be used by being attached to the surface of the display in the direction of the shielding layer 25.

A decoration film 20 for a hidden display according to another embodiment of the present disclosure may be prepared by a manufacturing method described below.

For example, a decoration film 20 for a hidden display according to another embodiment of the present disclosure may be manufactured by removing the base layer 11 and the optical guide layer 12 from the decoration film 10 for the hidden display according to the embodiment of the present disclosure.

Alternatively, a decoration film 20 for a hidden display according to another embodiment of the present disclosure may be manufactured by stacking the shielding layer 25, the background layer 24, and the decorative layer 23 in order, applying an adhesive to the upper surface of the decorative layer 23 to form the adhesive layer 22, and then attaching the adhesive layer 22 to the upper surface of the base layer 21 so that the adhesive layer 22 comes into contact with the base layer.

The decoration film 20 for the hidden display according to another embodiment of the present disclosure may be used mainly in a transfer type and an attachment type. It may be used without the base film 21, in this case, it may be used in the transfer type, and it may be attached to the display when there is the base film 21.

Further, when the operation state of a decoration film 20 for a hidden display according to another embodiment of the present disclosure is described, some of the light emitted from the display screen is absorbed and blocked by the shielding layer 25, and the remaining light is introduced into the plurality of light passage holes 26 and penetrates through the light passage holes 26 to be projected to the outside through the light passage holes 26, and thus the display screen information is visually recognized to the external user.

Meanwhile, the decoration film for the hidden display according to the present disclosure may allow, in a state in which a display is not operated in a normal situation, the decoration film to be displayed on a surface of the display to improve a sense of unity with a surrounding decoration film, and allow, in a situation in which a user turns on the display and operates the display, user visibility with respect to display information of the display to be improved and concurrently prevent delamination of layers.

### MODE OF THE EMBODIMENTS

While the present disclosure is described in more detail with reference to the following examples, the following examples are not intended to limit the scope of the present disclosure, and should be interpreted as an aid in understanding of the present disclosure.

### <Example 1: Manufacturing a decoration film for a hidden display>

First, on the base layer made of a polycarbonate (PC) film with a thickness of 250 *µ*m, an optical guide layer including a foundation configured to be made of a UV-curable acrylic resin and have a thickness of 3 *µ*m and a plurality of light guiders configured to have a circular cross-section extending from the foundation and arranged at equal intervals as shown in FIG. 4A was formed as a patterned layer using a polymer mold. Then, a decorative layer with a thickness of 1 *µ*m and having a through-hole was formed by applying latex ink to a digital printer so that the through-hole passes through the light guider, and then a background layer with a thickness of 2 *µ*m and having a through-hole was formed by coating a white carbon paste with a blade on the decorative layer, and then a shielding layer with a thickness of 2 *µ*m and having a through-hole was formed by coating a black carbon paste with a blade on the base layer, respectively so that the through-hole passes through the light guider, thereby manufacturing a decoration film for a hidden display. In this case, the light guider has a refractive index of 1.5, a vertical length of 10 *µ*m, an average cross-sectional diameter of 50 *µ*m, a distance between adjacent light guiders of 150 *µ*m, and the light guider had a protrusion formed by penetrating through the through-hole and protruding above the through-hole, and the protrusion had a round shape with a curvature radius of 10 *µ*m, and a protrusion height of 4 *µ*m.

### <Examples 2 to 12>

Manufactured in the same manner as in Example 1, but by changing the average cross-sectional diameter of the light guider, the distance between adjacent light guiders, the refractive index of the light guider, the curvature radius of the protrusion, and the like, a decoration film for a hidden display as shown in Tables 1 to 3 were manufactured.

### <Comparative Example 1>

Manufactured in the same manner as in Example 1, but only a decorative layer without a through-hole was printed on the base layer without the light guider, the background layer, and the shielding layer.

### <Experimental Example>

The decoration film for the hidden display manufactured according to the Examples and the Comparative Example was fixed so that its shielding layer side was disposed on the display panel, and then the following physical properties were evaluated and shown in Tables 1 to 3.

### 1. Measurement of the intensity ratio of emitted light to incident light

For the decoration film for hidden displays manufactured according to the Examples and Comparative Example, the ratio of the light intensity emitted toward the base layer to the light intensity incident on the decoration film for the hidden display when the display is in operation was measured using a CA-310 device from KONICA MINOLTA at a measurement angle of 2.5°, a measurement distance of 35 mm, and a measurement diameter of Φ27 mm. And, the measured light intensity ratio value of Example 1 was normalized to 100, and the light intensity ratio values of other Examples and Comparative Example were calculated based on this.

### 2. Evaluation of visibility (when the display is operated) and invisibility (when the display is not operated)

For the decoration film for the hidden display prepared according to the Examples and Comparative Example, display visibility when the display is operated and display invisibility when the display is not operated were evaluated, respectively. Specifically, each of display visibility when the display is operated and display invisibility when the display is not operated were evaluated by a seven-point method for 10 the experts with more than 10 years of experience in the industry.

### * Evaluation criteria for display visibility when the display is operated

7 points: very good visibility, 6 points: good visibility, 5 points: slightly good visibility, 4 points: normal visibility, 3 points: slightly poor visibility, 2 points: poor visibility, 1 points: very poor visibility

### * Evaluation criteria for display invisibility when the display is not operated

7 points: very good invisibility, 6 points: good invisibility, 5 points: slightly good invisibility, 4 points: normal invisibility, 3 points: slightly poor invisibility, 2 points: poor invisibility, 1 point: very poor invisibility

**[Table 1]**

| Items | | Example 1 | Example 2 | Example 3 | Example 4 |
|---|---|---|---|---|---|
| light guider | average cross-sectional diameter (*µ*m) | 50 | 5 | 100 | 520 |
| | distance between adjacent light guiders(*µ*m) | 150 | 150 | 150 | 150 |
| | refractive index | 1.5 | 1.5 | 1.5 | 1.5 |
| | curvature radius of protrusion (*µ*m) | 10 | 10 | 10 | 10 |
| intensity ratio of emitted light to incident light | | 100 | 90 | 102 | 103 |
| visibility (when display is operated) (/7-points) | | 6.7 | 4.1 | 6.8 | 6.9 |
| invisibility (when display is not operated) (/7-points) | | 6.7 | 6.7 | 6.1 | 4.9 |

**[Table 2]**

| Items | | Example 5 | Example 6 | Example 7 | Example 8 |
|---|---|---|---|---|---|
| light guider | average cross-sectional diameter (*µ*m) | 50 | 50 | 50 | 50 |
| | distance between adjacent light guiders(*µ*m) | 10 | 50 | 520 | 150 |
| | refractive index | 1.5 | 1.5 | 1.5 | 1.5 |
| | curvature radius of protrusion (*µ*m) | 10 | 10 | 10 | 1 |
| intensity ratio of emitted light to incident light | | 102 | 101 | 92 | 98 |
| visibility (when display is operated) (/7-points) | | 6.8 | 6.7 | 4.9 | 6.1 |
| invisibility (when display is not operated) (/7-points) | | 5.2 | 6.5 | 6.7 | 6.6 |

**[Table 3]**

| Items | | Example 9 | Example 10 | Example 11 | Example 12 | Comparat ive Example 1¹⁾ |
|---|---|---|---|---|---|---|
| light guider | average cross-sectional diameter (*µ*m) | 50 | 50 | 50 | 50 | - |
| | distance between adjacent light guiders(*µ*m) | 150 | 150 | 150 | 150 | - |
| | refractive index | 1.5 | 1.5 | 1.5 | 1.27 | - |
| | curvature radius of protrusion (*µ*m) | 3 | 250 | 280 | 100 | - |
| intensity ratio of emitted light to incident light | | 99 | 101 | 97 | 90 | 45 |
| visibility (when display is operated) (/7-points) | | 6.5 | 6.7 | 6.0 | 4.1 | 2.8 |
| invisibility (when display is not operated) (/7-points) | | 6.6 | 6.6 | 6.6 | 6.7 | 6.5 |
| 1) The above Comparative Example 1 represents a decoration film that does not include an optical guide layer. | | | | | | |

As shown in Tables 1 to 3, Examples 1, 3, 6, 9, and 10 - which satisfy all of the conditions including the average cross-sectional diameter of the light guider, the distance between adjacent light guiders, the refractive index of the light guider, the curvature radius of the protrusion, and the presence or absence of the optical guide layer - exhibited relatively higher ratios of emitted light to incident light, excellent display visibility when the display is operated, and excellent display invisibility when the display is not operated, compared to Examples 2, 4, 5, 7, 8, 11, 12, and Comparative Example 1, which fail to meet at least one of the above conditions.

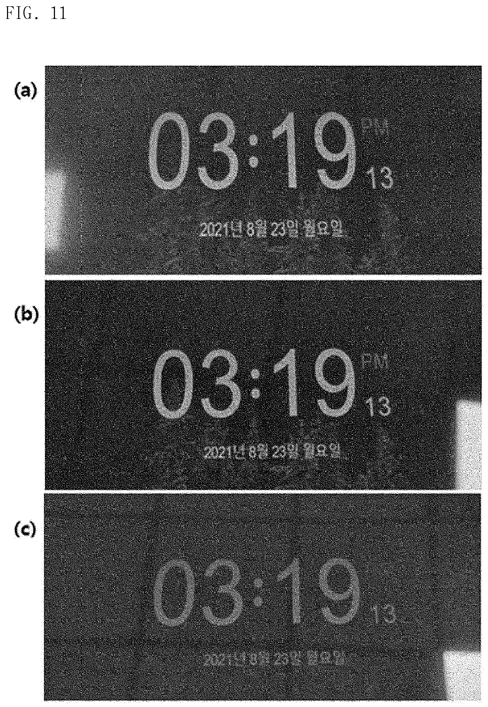

In particular, as shown in FIG. 11, it was confirmed that the visibility of the display screen was significantly lowered in the case of Comparative Example 1 (FIG. 11C), compared to Example 1 (FIG. 11B), when the display was operated.

Although the present disclosure has been described with reference to an embodiment of the present disclosure, the spirit of the present disclosure is not limited to the embodiments presented in the present specification, and those skilled in the art who understand the spirit of the present disclosure may easily propose other embodiments by adding, modifying, deleting, and substituting components within the same spirit, but the present disclosure is also within the spirit of the present disclosure.

## Claims

1. A decoration film for a hidden display comprising:
a base layer;
a decorative layer having at least one through-hole; and
an optical guide layer including a foundation configured to be disposed between the base layer and the decorative layer and at least one light guider configured to have a protrusion extending from the foundation and passing through the through-hole and protruding above the through-hole.

2. The decoration film of claim 1, further comprising:
a shielding layer configured to be disposed on the decorative layer and have a through-hole corresponding to the through-hole,
wherein the protrusion of the light guider is configured to protrude above the through-hole of the shielding layer.

3. The decoration film of claim 2, further comprising:
a background layer configured to be disposed between the decorative layer and the shielding layer, and have a through-hole corresponding to the through-hole,
wherein the light guider is configured to penetrate through the through-hole.

4. The decoration film of claim 3, wherein a refractive index of the light guider is greater than a refractive index of the decorative layer or a refractive index of the background layer.

5. The decoration film of claim 4, wherein a difference between the refractive index of the light guider and the refractive index of the decorative layer or a difference between the refractive index of the light guider and the refractive index of the background layer is greater than 0 and 0.5 or less.

6. The decoration film of one of claims 1 to 3, further comprising:
a cover layer configured to be disposed on the decorative layer and cover the protrusion of the light guider.

7. The decoration film of claim 6, wherein a refractive index of the light guider is greater than a refractive index of the cover layer.

8. The decoration film of claim 6, wherein a refractive index of the light guider is 1.3 or more, and a refractive index of the cover layer is 1.25 or more.

9. The decoration film of claim 1, wherein the light guider has a vertical length of 5 *µ*m to 90 *µ*m.

10. The decoration film of claim 1, wherein the protrusion of the light guider has a round shape with a predetermined curvature, and the protrusion has a curvature radius of 2.5 *µ*m to 260 *µ*m.

11. The decoration film of claim 1, wherein the protrusion of the light guider has a prism shape having at least two triangular prisms at its end, and an angle between two triangular prisms adjacent to each other is 70° to 100°.

12. The decoration film of one of claims 1 to 3, wherein the protrusion has a protrusion height greater than 0 and 10 *µ*m or less.

13. The decoration film of claim 1, wherein the light guider has an average cross-sectional diameter of 10 *µ*m to 500 *µ*m.

14. The decoration film of claim 1, wherein the optical guide layer includes at least two light guiders, and an average distance between two light guides adjacent to each other is 20 *µ*m to 500 *µ*m.

15. The decoration film of claim 1, wherein a horizontal cross-section of the light guider has a wavy shape including a long side which is a curved line and a short side which is a straight line or a curved line, and a longitudinal direction of the wavy shape and a longitudinal direction of the decoration film for the hidden display have an angle of 20° to 50°.

16. The decoration film of claim 15, wherein a longitudinal distance of the wave shape is 50 *µ*m to 150 *µ*m, and a distance between the long sides is 5 *µ*m to 50 *µ*m.

17. The decoration film of claim 1 or 15, wherein the light guider is configured to have an opaque portion in at least some of its area to block light transmission.

18. The decoration film of claim 15, wherein the light guider is configured to be disposed such that one longitudinal direction of the hidden display decoration film and the longitudinal direction of the wave shape form only one acute angle, or
the light guider is configured to be disposed such that a first wave shape in which one longitudinal direction of the hidden display decoration film and the longitudinal direction of the wave shape form an acute angle and a second wave shape forming an obtuse angle are alternately arranged.

19. A decoration film for a hidden display comprising:
a base layer;
a decorative layer configured to have at least one light passage hole;
a shielding layer configured to be disposed on the decorative layer and have a light passage hole corresponding to the light passage hole; and
an adhesive layer configured to be disposed between the base layer and the decorative layer.

20. The decoration film of claim 19, further comprising:
a background layer configured to be disposed between the decorative layer and the shielding layer and have a light passage hole corresponding to the light passage hole.
